# EUROPÄISCHE PATENTSCHRIFT

(11) **EP 4 073 545 B1**
(45) Veröffentlichungstag und Bekanntmachung des Hinweises auf die Patenterteilung: **18.11.2026**
(21) Anmeldenummer: 20820089.9
(22) Anmeldetag: 02.12.2020
(51) Int. Cl.: G01S 7/539, G01S 7/527, G01S 15/931, G01S 15/52, G01H 1/00, G07C 9/00, G01S 15/88, G01S 15/08, G01S 15/04, G01S 7/52, G01H 3/00, B60R 21/0134

(54) **BERÜHRUNGSDETEKTION MIT EINEM ULTRASCHALLSENSORSYSTEM**
CONTACT DETECTION BY MEANS OF AN ULTRASONIC SENSOR SYSTEM
DÉTECTION DE CONTACT AU MOYEN D'UN SYSTÈME DE CAPTEURS À ULTRASONS

(30) Priorität: 13.12.2019 DE 102019134307
(43) Veröffentlichungstag der Anmeldung: 19.10.2022
(73) Patentinhaber: Valeo Schalter und Sensoren GmbH, 74321 Bietigheim-Bissingen (DE)
(72) Erfinder: SALOMON, Sylvio, 74321 Bietigheim-Bissingen (DE); ROEGER, Marian, 74321 Bietigheim-Bissingen (DE); KUPFERNAGEL, Uwe, 74321 Bietigheim-Bissingen (DE)
(74) Vertreter: Pothmann, Karsten
(86) Internationale Anmeldenummer: PCT/EP2020/084265
(87) Internationale Veröffentlichungsnummer: WO 2021/115875

(56) Entgegenhaltungen:
- DE-A1- 10 034 524
- DE-A1- 10 342 006
- DE-A1- 102017 106 749
- DE-A1- 102017 118 939
- DE-A1- 2 938 969
- DE-A1- 3 226 517

## Beschreibung

Die vorliegende Erfindung betrifft ein Verfahren zur Berührungsdetektion mit einem Ultraschallsensorsystem, insbesondere eine rechnerische Kontaktdetektion durch aktives Anregen und Detektieren eines Störschallsignals mit einem verdeckt verbauten Ultraschallsensorsystem für ein Fahrzeug.

Auch betrifft die vorliegende Erfindung ein System zur Berührungsdetektion mit einem Ultraschallsensorsystem, welches insbesondere geeignet ist für eine rechnerische Kontaktdetektion durch aktives Anregen und Detektieren eines Störschallsignals mit einem verdeckt verbauten Ultraschallsensorsystem für ein Fahrzeug.

Des Weiteren betrifft die vorliegende Erfindung ein Fahrzeug mit dem System.

Des Weiteren betrifft die vorliegende Erfindung ein Computerprogramm, umfassend Befehle, die bei der Ausführung des Computerprogramms durch einen Computer diesen veranlassen, Schritte des Verfahrens auszuführen.

Des Weiteren betrifft die vorliegende Erfindung ein Datenträgersignal, das das Computerprogramm überträgt.

Des Weiteren betrifft die vorliegende Erfindung ein computerlesbares Medium, umfassend Befehle, die bei der Ausführung durch einen Computer diesen veranlassen, Schritte des Verfahrens auszuführen.

Üblicherweise werden Ultraschallwandler beziehungsweise Ultraschallsensorsysteme zur Überwachung des Umfelds in Fahrzeugen unverdeckt verbaut, das heißt es gibt im Bereich der Ultraschallwandler Öffnungen im Wandmaterial des Fahrzeugs.

Der verdeckte und damit von außen unsichtbare Verbau der Ultraschallwandler beziehungsweise Ultraschallsensorsysteme ist optisch zu bevorzugen, setzt sich derzeit allerdings nicht mehrheitlich durch, weil die dadurch während eines Ultraschallsignal-Sendevorgangs entstehenden und ohne weitere Maßnahmen nur langsam abklingenden parasitären Körperschallamplituden in der unmittelbar angrenzenden Fahrzeugstruktur, insbesondere in dessen Wandmaterial, eine zuverlässige Detektion der in Form von Echos über den Luftweg einkoppelnden Ultraschallsignale erheblich erschweren.

Verdeckt verbautes Ultraschallsensorsystem bedeutet beispielsweise bei einem Fahrzeug, dass ein Ultraschallsensor oder mehrere Ultraschallsensoren von außen, d. h. auf einer Fahrzeugaußenhaut, nicht sichtbar sind. Vom Ultraschallsensorsystem emittierte Ultraschallsignale durchdringen das Wandmaterial, an dem der Sensor angeordnet ist. Dabei durchdringen Ultraschallsignale das Wandmaterial für eine Ultraschalldetektion zweimal, nämlich beim Senden und beim Empfangen des Ultraschallsignals durch das verdeckt verbaute Ultraschallsensorsystem. Dabei wird das Wandmaterial in Schwingungen versetzt. Diese Schwingungen schwingen derart lange nach, dass die Echo-Laufzeitmessungen gestört werden.

Eine rechnerische Kontaktdetektion ist derzeit sowohl bei verdeckt als auch bei unverdeckt verbauten Ultraschallsensorsystemen durch diverse Messeinflüsse, insbesondere durch Störschall-/ beziehungsweise Körperschalleinflüsse, erschwert. Zur Lösung gibt es unterschiedliche Ansätze, um eine Kontaktdetektion zu ermöglichen, wobei die aktive Anregung eines Störschallsignals möglichst vermieden wird. Aktive Anregung eines Störschallsignals bedeutet hierbei, dass eine Sensoreinheit explizit Störschall anregt und entsprechende Detektionssignale aufgrund der expliziten Störschallanregung empfängt.

Beispielsweise betrifft die Offenlegungsschrift DE 10 2014 014 389 A1 die Erkennung eines Berührungsereignisses mittels eines Körperschallsensors. Dieser Körperschallsensor ist separat zu einem Ultraschallsensor ausgebildet, nutzt aber dessen Signalverarbeitungseinrichtung. Die Erkennung der Berührung ist passiv. Es erfolgt also keine aktive Anregung des Störschalls, insbesondere des Körperschalls.

Weiterhin bekannt ist die Lehre der Offenlegungsschrift DE 10 2006 012 336 A1. Diese offenbart die Verwendung von piezoelektrischem Lack zur Berührungsdetektion für schlüssellose Fahrzeugzugangssysteme. Ferner wird erwähnt, dass mit einem solchen Lack auch Parkrempler detektiert werden können. Auch hier erfolgt die Messung nicht durch die Ultraschallsensoren und es erfolgt ebenfalls keine aktive Anregung des Störschalls, insbesondere des Körperschalls.

Weiterhin bekannt ist die Lehre der Offenlegungsschrift DE 10 2017 109 009 A1. Diese offenbart ein Verfahren zur Erfassung eines Berührungsereignisses an der Außenhülle eines Fahrzeuges. Dabei wird ein Körperschallsignal mittels eines Körperschallsensors erfasst. Das Körperschallsignal wird durch eine Auswerteeinrichtung ausgewertet, um den Bereich auf der Außenhülle des Fahrzeugs zu bestimmen, der berührt wurde. Anhand der Position wird entschieden, ob ein Vandalismusschaden oder Anfahrschaden vorliegt. Die Messung erfolgt durch einen Körperschallsensor und nicht durch ein Ultraschallsensorsystem. Weiterhin ist keine aktive Anregung des Störschalls, insbesondere des Körperschalls, vorgesehen.

Weiterhin bekannt ist die Lehre der Offenlegungsschrift DE 10 2017 106 749 A1. Diese offenbart ein Verfahren zur Bestimmung eines Schadens an einem Kraftfahrzeug. Dabei werden Ultraschallsensoren genutzt, um Körperschallwellen zu detektieren, die durch eine externe Krafteinwirkung auf das Kraftfahrzeugbauteil erzeugt werden. Störschall wird nicht aktiv angeregt und Reflexionen des Körperteils, die wieder zum Ultraschallsensor gelangen, werden nicht ausgewertet. Es handelt sich somit um keine aktive Messung.

Weiterer Stand der Technik ist die Offenlegungsschrift DE 100 34 524 A1. Diese offenbart zur Erkennung von Beschädigungen (unfallbedingte Verformungen) die Messung eines Körperschallfrequenzspektrums. Dazu sind spezielle Impulsgeneratoren vorgesehen, welche die Karosserie des Kraftfahrzeugs anregen. Körperschallsensoren messen anschließend das daraus erzeugte Körperschallfrequenzspektrum, welches mit Referenzmessungen verglichen wird.

Weiterer Stand der Technik ist die DE 29 38 969 A1. Diese offenbart ein Ultraschall-Raumüberwachungssystem, bei dem ein Ultraschall-Sende-/Empfangswandler vorgesehen ist, der periodisch Abtastimpulse sendet und in definierten Zeitfenstern empfangsbereit geschaltet wird. Zur Reduzierung von Fehlalarmen ist das System in der Lage, zwischen relevanten und irrelevanten Bewegungen eines Objekts im zu überwachenden Raum durch den Vergleich der zu verschiedenen Zeitpunkten erfassten Echosignale unterscheiden und weist eine Unempfindlichkeit gegenüber der periodischen Bewegung eines Objekts auf.

Weiterer Stand der Technik ist die DE 32 26 517 A1. Diese offenbart eine Einrichtung zur Raumüberwachung durch digitale Auswertung eines komplexen Echosignals. Die Einrichtung umfasst einen Ultraschallgeber und einen Empfänger für reflektierte Schallwellen, wobei diese für ein bestimmtes Zeitintervall aktiviert sind, sowie eine Auswerteeinrichtung mit Baugruppen wie Verstärker, Filter und Schreib-Lesespeicher zur Registrierung der empfangenen Signale. Die Einrichtung speichert eine Referenz-Signalsumme des unveränderten Raums und vergleicht diese mit nachfolgenden Messungen, wobei Abweichungen zur Erkennung von Geometrieänderungen des Raums führen.

Weiterer Stand der Technik ist die DE 103 42 006 A1. Diese offenbart eine Bedienvorrichtung für ein Elektrogerät, vorzugsweise für ein Elektrokochgerät. Die bekannte Vorrichtung weist eine auslösende Bedienfläche auf, bei der ein Sender Schall-Impulse gegen die Bedienfläche aussendet und ein Empfänger die reflektierten Signale empfängt. Die Vorrichtung umfasst eine Auswerte-Einrichtung, die die Signale durch Vergleich der abgestrahlten bzw. reflektierten Signale mit dem Anlegen eines Fingers oder Körperteils erfasst. Vorteilhafterweise wird die Frequenz der Schall-Impulse so gewählt, dass sie der Eigenfrequenz der Bedienfläche entspricht, wodurch bei Anlegen eines Fingers eine besonders prägnante Schwingung entsteht. Die Bedienvorrichtung ist dabei temperaturbeständig ausgebildet und kann mittels Piezo-Technik realisiert werden. Ausgehend von dem oben genannten Stand der Technik liegt der Erfindung somit die Aufgabe zugrunde, ein Verfahren zur Kontaktdetektion zu verbessern.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zur Berührungsdetektion für ein verdeckt verbautes Ultraschallsensorsystem angegeben. Erfindungsgemäß ist das Verfahren für ein Fahrzeug mit einem Wandmaterial vorgesehen. Das Verfahren weist die Verfahrensschritte von Anspruch 1 auf.

In der Beschreibung und den beigefügten Ansprüchen wird unter der Detektion von Umgebungsinformationen, also von Referenz-Umgebungsinformationen und Echtzeit-Umgebungsinformationen, ein Erzeugen von Ultraschall, insbesondere eines Ultraschallsignals oder Ultraschallpulses, und damit verbundenem Anregen des Wandmaterials und Aussenden von Ultraschall und anschließendem Messen der Schwingungen, insbesondere des Wandmaterials, mittels eines Ultraschallsensors, verstanden.

Erfindungsgemäß ist außerdem ein System nach Anspruch 9 zur Berührungsdetektion für ein verdeckt verbautes Ultraschallsensorsystem angegeben, welches für ein Fahrzeug mit einem Wandmaterial verwendet wird.

Weiter ist erfindungsgemäß ein Fahrzeug mit dem System angegeben. Vorzugsweise ist das Fahrzeug ein Ego-Fahrzeug eines Fahrers.

Weiter ist erfindungsgemäß ein Computerprogramm angegeben, umfassend Befehle, die bei der Ausführung des Computerprogramms durch eine Recheneinheit des Systems zur Berührungsdetektion diesen veranlassen, Schritte des Verfahrens auszuführen. Ein Computerprogramm ist eine Sammlung von Anweisungen zum Ausführen einer bestimmten Aufgabe, die dafür konzipiert ist, eine bestimmte Klasse von Problemen zu lösen. Die Anweisungen eines Programms sind dafür konzipiert, durch einen Computer ausgeführt zu werden, wobei es erforderlich ist, dass ein Computer Programme ausführen kann, damit es funktioniert.

Weiter ist erfindungsgemäß ein computerlesbares Speichermedium angegeben, umfassend Befehle, die bei der Ausführung durch eine Recheneinheit des Systems zur Berührungsdetektion diesen veranlassen, Schritte des Verfahrens auszuführen.

Grundidee der vorliegenden Erfindung ist es also, Ultraschallsignale in das Wandmaterial einzuleiten und Störsignale, insbesondere Körperschallstörsignale, als Referenz-Störschallinformationen eines Wandmaterials zu bestimmen. Nach der entsprechenden Detektion von Echtzeit-Störschallinformationen des Wandmaterials wird eine Differenz zwischen den Echtzeit-Störschallinformationen und den Referenz-Störschallinformationen bestimmt. Diese Differenz ist, solange sich an den Bedingungen der Fahrzeugwand nichts ändert, nahezu null. Die Differenz reagiert sehr empfindlich auf Störungen, sodass sogar Berührungen der Fahrzeugaußenwand erkannt werden können. Auch können auf diese Weise Beschädigungen oder Kratzvorgänge an der Außenwand detektiert werden. Erfindungsgemäß erlaubt ist damit eine präzise Detektion von Veränderungen im Störschallmuster, insbesondere Körperschallmuster, und eine damit einhergehende hohe Empfindlichkeit bei der Berührungsdetektion.

Erfindungsgemäß wird kein Körperschallfrequenzspektrum bestimmt, sondern eine Änderung des reflektierten Störschalls, insbesondere des Körperschalls, erkannt.

In anderen Worten, der Erfindung liegt das Prinzip zugrunde, dass eine Signaländerung untersucht wird. Im Rahmen der rechnerischen Kompensation des Störschalls lassen sich auch temperaturabhängige Veränderungen desselben berücksichtigen. Dieses Verfahren ermöglicht somit eine zuverlässige Detektion durch das Ultraschallsensorsystem, wobei das Ultraschallsensorsystem, beispielsweise unter dem Wandmaterial verbaut, eine Vielzahl von Ultraschallsensoren aufweisen kann, die gleichzeitig und permanent detektieren können, um ein kontinuierlich präzises Detektionsergebnis zu erzielen. Das vorgestellte Verfahren gestattet eine signifikante Reduzierung des konstruktiven Aufwandes sowie des Materialaufwandes, sodass sich bei vergleichbarer oder sogar gesteigerter Leistungsfähigkeit des verdeckten Ultraschall-Detektionssystems eine deutliche Reduzierung der Kosten und des Gewichtes realisieren lässt. Auch lässt sich dieses Verfahren zur Kompensation des Körperschalls bei einem unverdeckt verbauten Ultraschall-Detektionssystem anwenden, wobei das jeweilige durch das Ausschwingen der Membran erzeugte und ebenfalls als Körperschall interpretierbare Signal bei jeder Messung herausgerechnet wird. Hierbei bildet die Membran beispielhaft das Wandmaterial. Bei einer unverdeckten Ausgestaltung der Ultraschallwandler erhöht sich die Qualität der Detektionsergebnisse aus Detektionen mit geringer Entfernung, beispielsweise näher 10 Zentimeter.

Erfindungsgemäß können über eine Auswertung des Differenzsignals neben Körperschall erzeugenden Berührungen auch solche Berührungen detektiert werden, die selbst weder Luft- noch Körperschall erzeugen. Auch statische Berührungen lassen sich damit erfassen. Es sind prinzipiell sowohl großflächige als auch punktuelle Berührungen detektierbar.

Beispielhaft ist das Verfahren zur Berührungsdetektion anwendbar, wenn das betreffende Wandmaterial des Fahrzeugs, insbesondere der Fahrzeugaußenhaut, eine hinreichende Ausbreitung des Körperschalls gestattet, was vor allem bei metallischen Stoffen, harten Kunststoffen und Glas gegeben ist. Daher bieten sich sämtliche Bereiche der Fahrzeugaußenhaut und insbesondere folgende Konfigurationen für eine Anwendung des Verfahrens an.

Beispielsweise lässt sich die Erfindung zur Nutzung im Zusammenhang mit Keyless-Entry-Systemen verwenden, um anhand der Berührung zu erkennen, welche Tür/Klappe geöffnet werden soll. Ein Keyless-Entry System ist ein System, welches ein Fahrzeug entriegelt, wenn sich eine Hand dem Türgriff eines mit dem System ausgestatteten Fahrzeuges bis auf wenige Zentimeter nähert. In diesem Fall wird das System mit Hilfe eines stets aktiven bordseitigen kapazitiven oder optischen Näherungssensors aus dem sogenannten "Sleep-Mode" geweckt und über mehrere im Fahrzeug verteilte Antennen ein codiertes Anfragesignal ausgesendet. Das bordseitige System geht darauf in einen Empfangsmodus und wartet auf Bestätigung. Ist der Schlüssel in Reichweite, empfängt er auf einer bestimmten Frequenz das Signal, dekodiert es und sendet es aktiv mit einer neuen Codierung wieder aus. Im Fahrzeug decodiert es wiederum ein Steuergerät. Da das System beide Codier-Tabellen kennt, kann es die eigene ursprüngliche Aussendung mit dem gerade empfangenen Signal vergleichen. Gibt es innerhalb einer definierten Zeit keine korrekte Antwort, passiert nichts und das System schaltet wieder auf Standby. Ein Ziehen des Türgriffes hat keine Wirkung, da der Zustand des Türschlosses vom System nicht verändert wurde. Stimmen jedoch beide Codes überein, bewirkt das eine Authentisierung, das bordseitige System gibt das Schloss frei, und ein Ziehen des Griffes entriegelt die Tür.

Denkbar ist, die verdeckten Ultraschallwandler zu verwenden, die für die normale Überwachung des Umfelds bzw. Objektdetektion ohnehin schon im Fahrzeug vorhanden sind. Folglich kann im umgekehrten Fall ein für die Berührungsdetektion verdeckt verbauter Ultraschallwandler gleichzeitig auch zur Überwachung des Umfelds bzw. Objektdetektion bzw. als Näherungssensor verwendet werden.

Grundsätzlich kann vorgesehen sein, vorgespeicherte Referenz-Umgebungsinformationen, insbesondere für Störschallsignalinformationen, zur Verfügung zu stellen. Diese Detektionen können beispielsweise unter Verwendung von Schallabsorbern erfolgen, beispielsweise in einem entsprechend konfigurierten Tonstudio.

Als Ultraschall gilt Schall mit Frequenzen oberhalb des Hörfrequenzbereichs des Menschen. Er umfasst vorzugsweise Frequenzen ab 16 kHz. Schall ab einer Frequenz von etwa 1 GHz wird auch als Hyperschall bezeichnet. Bei Frequenzen unterhalb des für Menschen hörbaren Frequenzbereichs spricht man dagegen von Infraschall.

In Gasen und Flüssigkeiten breitet sich Ultraschall als Longitudinalwelle aus. In Festkörpern kommt es wegen der auftretenden Schubspannungen zusätzlich auch zur Ausbreitung von Transversalwellen. Der Übergang von Luftschall in den Festkörper, oder umgekehrt, kann aus Effizienzgründen insbesondere mit einem Koppelmedium mit angepasster akustischer Impedanz sowie bestimmter Dicke erfolgen.

Ultraschall wird je nach Material eines Hindernisses an diesem reflektiert, in ihm absorbiert, gestreut oder tritt hindurch, sogenannte Transmission. Wie bei anderen Wellen treten auch Brechung, Beugung und Interferenz auf, sodass das Ultraschallsystem sehr sensibel ausgestaltet ist.

Luft weist eine stark mit der Frequenz steigende Dämpfung für Ultraschall auf. Die Luftschalldämpfung hängt auch von der Lufttemperatur und von der Luftfeuchtigkeit ab. In Flüssigkeiten breitet sich Ultraschall dagegen dämpfungsarm aus.

Der erste Schritt des Verfahrens ist somit das Detektieren von Referenz-Umgebungsinformation.

Im Sinne der Erfindung ist nicht zwischen Information im Singular oder Plural zu unterscheiden, da dies nicht zum Erfindungswesen beiträgt. Zudem kann die Referenz-Umgebungsinformation nur Störschallsignalinformation des Wandmaterials und Luftschallsignalinformation aufweisen. Anders formuliert gilt das Wort ein als unbestimmter Artikel und nicht als Zahlwort.

Als Wandmaterial gilt eine Außenwand des Fahrzeugs, beispielsweise ein Karosseriebestandteil, aber auch in einem Schiebedach verwendetes Gorillaglas.

Eine Störschallsignalinformation ist eine Signalinformation, die zusätzlich zu einer gewollten Schalldetektion, gegebenenfalls störend, hinzukommt. Ebendiese Signalinformation gilt es im Stand der Technik zu kompensieren.

Als Luftschallsignalinformation gilt jener Ultraschall, der sich außerhalb des Wandmaterials befindet.

Anschließend erfolgt ein Speichern der Referenz-Umgebungsinformation. Dieser Schritt kann einmalig erfolgen oder abhängig von definierten Bedingungen wiederholt werden. Wesentlich ist, dass zum Durchführen des Verfahrens eine in einem vorhergehenden Schritt detektierte Referenz-Umgebungsinformation zu einem späteren Zeitpunkt abrufbar ist.

Sofern eine Referenz-Umgebungsinformation abrufbar gespeichert ist, erfolgt das Detektieren von Echtzeit-Umgebungsinformation, umfassend Störschallsignalinformation, insbesondere Körperschallsignalinformation, des Wandmaterials, und Luftschallsignalinformation, und Objektschallsignalinformation eines das Wandmaterial berührenden Objekts, mit dem Ultraschallsensor. Es konnten charakteristische Signale für Objekte, z. B. für das Auflegen einer Hand auf das Wandmaterial, gefunden werden. Somit wird zusätzlich zur vorhandenen Referenzinformation eine weitere Echtzeitinformation detektiert. Sofern es eine Abstandsänderung eines detektierten Objekts zwischen den Zeitpunkten der unterschiedlichen Detektionen gegeben hat, ist diese mit detektiert.

Als Objektschallsignalinformation gilt jener Ultraschall, der sich außerhalb des Wandmaterials befindet und welcher durch eine Berührung des Wandmaterials durch ein Objekt erzeugt wird. Es handelt sich um Information, welche weder der Störschallsignalinformation noch der Luftschallsignalinformation entspricht.

Schließlich wird das Differenzsignal gebildet zwischen den Umgebungsinformationen aus Referenz-Umgebungsinformation und Echtzeit-Umgebungsinformation, mit einer Recheneinheit. Somit wird eine Referenzmessung im Zeitbereich von den späteren Echtzeit-Messungen abgezogen. Dabei kann entweder die Referenz-Umgebungsinformation von der Echtzeit-Umgebungsinformation subtrahiert werden oder die Echtzeit-Umgebungsinformation von der Referenz-Umgebungsinformation. Zu beachten gilt dabei, dass die Rechenalgorithmen einheitlich eingestellt sind.

Die anschließenden Schritte erfolgen nach dem Stand der Technik, also wie bei außen verbauten Ultraschallsensoren. So wird üblicherweise ein Signal verwendet, vorliegend das Differenzsignal, um beispielsweise Schwellwertüberschreitungen zu prüfen.

Erfindungsgemäß ist vorgesehen, dass der Ultraschallsensor ein Abstandssensor ist. Gemäß der Erfindung ist vorgesehen, dass das Ultraschallsensorsystem verdeckt eingebaut ist. In anderen Worten wird der Störschall, in Form von Körperschall, durch verdeckt verbaute Ultraschallsensoren gemessen, welche auch als Abstandssensoren dienen.

Gemäß einer vorteilhaften Ausführungsform der Erfindung ist vorgesehen, dass das Wandmaterial des Fahrzeugs eine Materialstärke von mindestens 0,1 Millimeter und von höchstens einschließlich 3,0 Millimeter aufweist. Bei dieser Wandmaterialdicke hat sich mit Vorteil eine geeignete Sensitivität des Ultraschallsensors herausgestellt. Gemäß einer vorteilhaften Ausführungsform ist die Erfindung gekennzeichnet durch ein Glätten und/oder Filtern des Differenzsignals. Für den anschließenden Rechenprozess vorbereitete Differenzsignale ermöglichen eine zuverlässigere beziehungsweise weniger fehleranfälligere Detektion der Fahrzeugumgebung.

Gemäß einer vorteilhaften Ausführungsform der Erfindung ist vorgesehen, dass der Ultraschallsensor eine Frequenz von einschließlich mindestens 40 kHz bis einschließlich 80 kHz aufweist. Es hat sich herausgestellt, dass Störschall, insbesondere Körperschall, in diesem Frequenzbereich gut kompensiert werden kann, sodass eine zuverlässige beziehungsweise weniger fehleranfällige Detektion der Fahrzeugumgebung ermöglicht wird.

Erfindungsgemäß ist vorgesehen, dass
das Bilden des Differenzsignals zwischen den Umgebungsinformationen auf der Basis von Rohdaten, einer Hüllkurve, und/oder eines anders gefilterten Empfangssignals, beispielsweise einer Korrelation mit einem Sendesignal des Ultraschallsensors erfolgt. Rohdaten erfordern eine nur reduzierte Rechenleistung und beschleunigen damit die Datenverwertung.

Gemäß einer vorteilhaften Ausführungsform der Erfindung ist vorgesehen, dass das Detektieren der Referenz-Umgebungsinformation in definierten Zeitabständen wiederholt wird. Grundsätzlich kann jede detektierte Referenz-Umgebungsinformation auch detektierte Objekte umfassen. Um eine möglichst zuverlässige und genaue Detektion zu ermöglichen ist in einer Ausführungsform vorgesehen, dass die Detektion der Referenz-Umgebungsinformation in regelmäßigen Zeitabständen erfolgt. Gemäß einer vorteilhaften Ausführungsform der vorgenannten Ausführungsform ist vorgesehen, dass die definierten Zeitabstände weniger als eine Minute betragen. Bevorzugte Zeitabstände, um eine möglichst zuverlässige und genaue Detektion zu ermöglichen, können sein insbesondere mindestens 10 Millisekunden.

Gemäß einer vorteilhaften Ausführungsform der Erfindung ist vorgesehen, dass das Detektieren der Referenz-Umgebungsinformation ereignisbasiert wiederholt wird. Dies bedeutet, dass ein externer Faktor als Ereignis eine Detektion der Referenz-Umgebungsinformation initiiert. Dies reduziert die Anzahl der Rechenvorgänge. Gemäß einer vorteilhaften Ausführungsform der vorgenannten Ausführungsform ist vorgesehen, dass das Detektieren der Referenz-Umgebungsinformation derart ereignisbasiert wiederholt wird, dass eine Temperaturänderung und/oder eine Feuchtigkeitsänderung ein wiederholtes Detektieren der Referenz-Umgebungsinformation auslöst beziehungsweise auslösen. Es hat sich herausgestellt, dass diese Einflüsse als Ereignisse geeignet sind, um beim Überschreiten eines definierten Änderungsbetrages der Temperatur und/oder der Feuchtigkeit, eine Neudetektion derart wiederholend vorzunehmen, dass eine zuverlässige Detektion ermöglicht wird.

Gemäß einer vorteilhaften Ausführungsform der Erfindung ist vorgesehen, dass ein Signalanteil mindestens eines mittels Luftschallsignalinformation und Objektschallsignalinformation detektierten Objekts in der Referenz-Umgebungsinformation ein Negativsignal im Differenzsignal ergibt, sofern das Objekt seine Position relativ zum Fahrzeug bzw. zum jeweiligen Ultraschallwandler verändert hat. Diese Konfiguration stellt weitere Daten zur Verfügung, die verwendet werden können, um die Präzision und Zuverlässigkeit des Detektionsergebnisses zu erhöhen. Das Negativsignal beziehungsweise das Objekt können insbesondere anhand der Amplitudenveränderung und/oder der Phasenveränderung erfasst werden. Gemäß einer vorteilhaften Ausführungsform der vorgenannten Ausführungsform ist vorgesehen, dass das Negativsignal in seiner Umkehrung als Positivsignal in der Echtzeit-Umgebungsinformation zur Objektverfolgung verwendet wird. Dieses Negativsignal kann verwendet werden, um das Objekt anhand der Kenndaten des Negativsignals als Positivsignal gegenüber dem vorbekannten Referenzsignal zu verfolgen.

Gemäß einer vorteilhaften Ausführungsform der Erfindung ist vorgesehen, dass die Recheneinheit eine im Ultraschallsensorsystem anwendungsspezifische integrierte Schaltung ist. Dies ermöglicht eine zuverlässige Datenverarbeitung bei kostengünstigen Baueinheiten. Eine anwendungsspezifische integrierte Schaltung, in Englisch application-specific integrated circuit, ASIC, ist eine elektronische Schaltung, die als integrierter Schaltkreis realisiert ist. Die Funktion eines ASICs ist damit nicht mehr veränderbar, die Herstellungskosten sind dafür geringer bei hohen Einmalkosten.

Gemäß einer vorteilhaften Ausführungsform der Erfindung ist vorgesehen, dass das Verfahren ein Verfahren zur rechnerischen Körperschallkompensation ist und dass die Störschallsignalinformation eine Körperschallsignalinformation ist. Eine Körperschallsignalinformation ist eine Form von Störschallsignalinformation, wobei als Körperschallsignalinformation Körperschall gilt, der von dem Ultraschallsensor detektiert wird, wobei dies Schwingungen des Wandmaterials entspricht. Eine solche Anwendung eignet sich insbesondere für verdeckt verbaute Ultraschallwandler, beispielsweise an Fahrzeugen.

Gemäß einer vorteilhaften Ausführungsform der Erfindung ist vorgesehen, dass das vorgestellte Verfahren zur rechnerischen Schallkompensation im Zusammenhang mit verdeckten Ultraschallwandlern Anwendung findet, um gezielt einzelne oder mehrere unerwünschte Luftschallsignale der Umgebung auszublenden, zum Beispiel ausgehend von einer Anhängerkupplung oder einem Fahrradträger, auch sehr geringe Veränderungen einer unter Umständen komplexen Echolandschaft der Umgebung zu detektieren, zum Beispiel zur Detektion von Objekten unterhalb des Fahrzeugs mittels im Bereich des Fahrzeugunterbodens befindlicher Ultraschallwandler, und/oder um gegebenenfalls Veränderungen im Körperschallmuster zu detektieren, zum Beispiel durch Temperaturänderung, Verschmutzung, Verformung und/oder Beschädigung. Eine Beschädigung kann beispielsweise eine Glasscheibenbeschädigung sein. Dabei kann mindestens ein Ultraschallwandler an die Glasscheibe befestigt werden und deren Körperschall messen. Wenn die Glasscheibe bricht, ändert sich das detektierte Körperschallsignal, sodass auf eine Glasbeschädigung geschlossen werden kann. Somit gilt ein gegenüber dem initialen Störschallsignal gleichbleibendes Störschallsignal als Signal für eine nicht gebrochene Glasscheibe.

Nachfolgend wird die Erfindung unter Bezugnahme auf die anliegende Zeichnung anhand bevorzugter Ausführungsformen näher erläutert.

Es zeigt
- Fig. 1: eine schematische Ansicht eines Ultraschallsensorsystems gemäß einer bevorzugten Ausführungsform der Erfindung,
- Fig. 2: ein Auto mit dem Ultraschallsensorsystem,
- Fig. 3: beispielhafte zeitliche Signalverläufe und -differenzen erzeugt gemäß dem Verfahren, und
- Fig. 4: ein Flussdiagramm eines Verfahrens zur Berührungsdetektion.

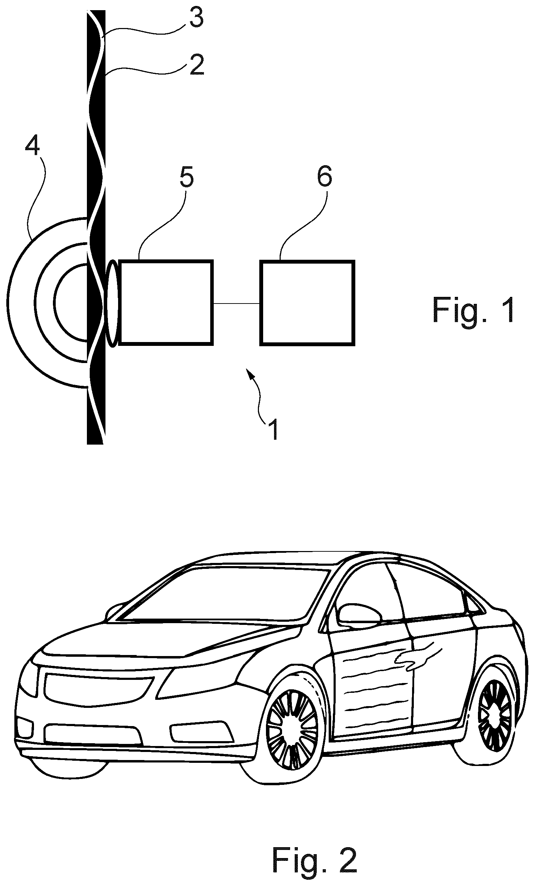

Die Figur 1 zeigt ein verdeckt verbautes Ultraschallsensorsystem 1 mit einem Ultraschallsensor 5, der an einem Wandmaterial 2 eines Fahrzeugs angeordnet ist, um Störschallsignalinformation 3, insbesondere Körperschallsignalinformation, Luftschallsignalinformation 4 und Objektschallsignalinformation 7 zu detektieren. Das Ultraschallsensorsystem kann in einem Auto integriert sein, siehe Fig. 2. Im Folgenden wird bei der Störschallsignalinformation 3 im Rahmen konkreter, bevorzugter Ausführungsbeispiele von Körperschallsignalinformation ausgegangen. Die Erfindung beschränkt sich nicht auf verdeckt verbaute Ultraschallsensoren 5, obgleich diese zur Lösung einer konkreten Problemstellung exemplarisch in den Ausführungsbeispielen verwendet werden.

Verdeckt verbaut bedeutet, dass das Ultraschallsensorsystem 1 den Sender beziehungsweise Empfänger innerhalb des Fahrzeugs und optisch von außen nicht sichtbar angeordnet aufweist.

Die Verarbeitung der Körperschallsignalinformation und der Luftschallsignalinformation 4 erfolgt in einer Recheneinheit 6.

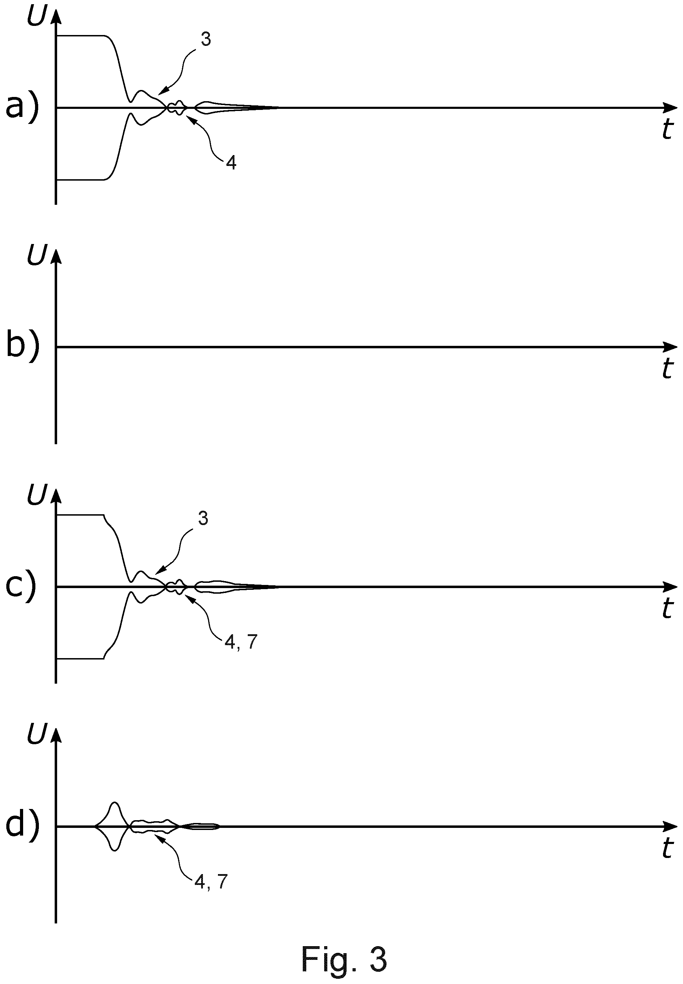

In Figur 1 ist kein Objekt vorhanden, das detektiert werden könnte. Ein solches Objekt liegt jedoch im Fall der Zeitverläufe nach den Figuren 3c (drittes Bild von oben) beziehungsweise 3d (unterstes Bild) vor.

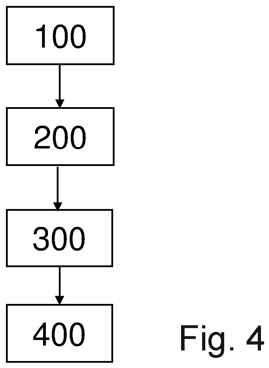

Figur 4 zeigt schematisiert ein Flussdiagramm zur Berührungsdetektion für ein verdeckt oder unverdeckt verbautes Ultraschallsensorsystem 1, insbesondere für ein Fahrzeug mit einem Wandmaterial 2. Das Verfahren weist folgende Schritte auf:
Gemäß einem Schritt mit einer Bezugsziffer "100" erfolgt ein Detektieren von Referenz-Umgebungsinformation mit einem Ultraschallsensor 5 des Ultraschallsensorsystems 1. Die Referenz-Umgebungsinformation umfasst einen zeitlichen Verlauf eines Signals mit Störschallsignalinformation 3 eines Wandmaterials 2 und Luftschallsignalinformation 4.

Es erfolgt insbesondere eine definierte Anregung und Detektion des charakteristischen Körperschallsignals 100 mittels verdeckt verbautem Ultraschallwandler sowie Aufzeichnung dieser Systemantwort im Zeitbereich zur späteren Nutzung als Referenzsignal oder zur Erzeugung eines solchen.

Gemäß einem Schritt mit der Bezugsziffer "200" erfolgt ein Speichern der Referenz-Umgebungsinformation.

Gemäß einem Schritt mit der Bezugsziffer "300" erfolgt ein Detektieren von Echtzeit-Umgebungsinformation mit dem Ultraschallsensor 5. Die Echtzeit-Umgebungsinformation umfasst einen zeitlichen Verlauf eines Signals mit Störschallsignalinformation 3 des Wandmaterials 2 und Luftschallsignalinformation 4 und Objektschallsignalinformation 7 eines das Wandmaterial 2 berührenden Objekts.

Gemäß einem Schritt mit der Bezugsziffer "400" erfolgt ein Bilden eines Differenzsignals, mit einer Recheneinheit 6, zwischen den Umgebungsinformationen aus Referenz-Umgebungsinformation und Echtzeit-Umgebungsinformation.

Ein weiterer Schritt umfasst eine Anwendung von Methoden zur Interpretation des Differenzsignals.

Insbesondere erfolgt durch die Bildung der Differenz dieser jeweiligen Signale und des Referenzsignals im Zeitbereich eine rechnerische Kompensation des Körperschallsignals. Solange sich das Körperschallmuster nicht ändert, zeigt das Differenzsignal keinen nennenswerten Signalausschlag. Bei Berührung verändert sich das Körperschallmuster, verursacht durch eine damit einhergehende Materialspannung und -verformung und/oder verursacht durch einen damit einhergehenden Luft- und Körperschall und/oder insbesondere verursacht durch eine damit einhergehende veränderte mechanische Dämpfung der den Körperschall tragenden Fahrzeugaußenhaut. In der Folge entsteht ein Signalausschlag im Differenzsignal.

Gemäß der vorteilhaften Ausführungsform nach Figur 1 ist vorgesehen, dass die Recheneinheit 6 eine im Ultraschallsensorsystem 1 anwendungsspezifische integrierte Schaltung ist.

Figur 3, oberstes Bild, zeigt ein Sende- und Empfangssignal bei einem verdeckten Ultraschallsensorsystem 1 beziehungsweise einem verdeckten Ultraschallsensor 5 gemäß einer bevorzugten Ausführungsform der Erfindung. Dabei ist kein Objekt, wie z. B. eine Hand, die auf einer Fahrzeugkarosserie aufliegt, im Detektionsbereich angeordnet, sodass die Luftschallsignalinformation 4 bzw. Objektschallsignalinformation 7 keinen Signalausschlag erzeugt. Da der Ultraschallsensor 5 verdeckt ist, detektiert er eine Störbeziehungsweise Körperschallsignalinformation 3. Mithin erfolgt ein Detektieren von Referenz-Umgebungsinformation ohne Objekt.

Figur 3, zweites Bild von oben, zeigt schematisch vereinfacht das Differenzsignal zwischen den Umgebungsinformationen aus Referenz-Umgebungsinformation und Echtzeit-Umgebungsinformation, wobei kein Objekt im Detektionsbereich angeordnet ist. Bei keiner detektierten Berührung liegt demnach eine vollständige Kompensation zwischen Referenz-Umgebungsinformation und Echtzeit-Umgebungsinformation vor.

Figur 3, drittes Bild von oben, zeigt ein Sende- und Empfangssignal bei einem verdeckten Ultraschallsensorsystem 1 beziehungsweise einem verdeckten Ultraschallsensor 5 gemäß einer bevorzugten Ausführungsform der Erfindung. Dabei ist ein Objekt im Detektionsbereich angeordnet, wie zum Beispiel eine Hand, welche an dem Wandmaterial 2 anliegt. Hierdurch ist für die Luftschallsignalinformation 4 und für die Objektschallsignalinformation 7 ein Signalausschlag zu verzeichnen.

Luftschallsignalinformation 4 und Objektschallsignalinformation 7 sind vermischt. Da der Ultraschallsensor 5 verdeckt ist, detektiert er zudem eine Stör- beziehungsweise Körperschallsignalinformation 3. Diese überlagern sich jedoch, sodass das Objekt allein aus dieser Detektion nicht identifiziert werden kann. Anders formuliert ist das Signal des Objekts durch das Signal des Körperschalls beziehungsweise des Wandmaterials 2 überdeckt.

Figur 3, unterstes Bild, zeigt schematisch vereinfacht das Differenzsignal zwischen den Umgebungsinformationen aus Referenz-Umgebungsinformation und Echtzeit-Umgebungsinformation. Auch hier können die Luftschallsignalinformation 4 und die Objektschallsignalinformation 7 vermischt sein. Es wird ein für das Objekt charakteristischer Signalverlauf erzeugt, so dass z. B. anhand einer Charakterisierung der Signalhüllkurve erkannt werden kann, um welches Objekt es sich handelt. In anderen Worten kann bei der Differenzbildung erkannt werden, dass eine unvollständige Kompensation zwischen Referenz-Umgebungsinformation und Echtzeit-Umgebungsinformation vorliegt.

Wurde die Referenzmessung durchgeführt, während sich ein Objekt im Detektionsbereich befand, so wird dieses im Differenzsignal sichtbar, sobald es seine Position relativ zum Ultraschallwandler verändert. Hierbei kann es ausreichen, wenn das Objekt seine Position relativ zum Ultraschallwandler auch nur im Submillimeterbereich verändert.

In anderen Worten, es können neben Körperschall erzeugenden Berührungen auch solche Berührungen detektiert werden, die selbst weder Luft- noch Körperschall erzeugen. Auch statische Berührungen lassen sich erfassen. Es sind prinzipiell sowohl großflächige als auch punktuelle Berührungen detektierbar.

Die Häufigkeit, mit der ein Referenzsignal erzeugt wird, kann sehr unterschiedlich sein. Z. B. kann auch jede Messung als eine Referenz für die unmittelbar folgende Messung dienen. Andererseits kann auch nur jede 100. Messung als Referenz herangezogen werden. Des Weiteren lässt sich eine Referenz auch aus mehreren Messungen bilden.

Da bereits sehr geringe Veränderungen des Körperschallmusters zu einer unvollständigen Kompensation bei der Differenzbildung führen, sind schon vergleichsweise leichte Berührungen detektierbar. Das Körperschallmuster weist insbesondere gegenüber einer Veränderung der mechanischen Dämpfung eine hohe Empfindlichkeit auf, sodass z. B. schon das leichte Auflegen einer Hand auf einen Bereich der den Körperschall tragenden Struktur einen signifikanten Signalausschlag im Differenzsignal bewirkt.

Mit der Anregung des Körperschalls geht auch die Erzeugung von Luftultraschall einher. Signalausschläge im Differenzsignal aufgrund von Körperschalländerungen sind in ihrem Verlauf jedoch in der Regel signifikant unterscheidbar von Signalausschlägen, die ein verändertes Luftschallecho hervorruft.

Eine Verknüpfung des erfindungsgemäßen Verfahrens mit anderen aus dem Stand der Technik bekannten Methoden zur Berührungsdetektion, insbesondere mit jenen Methoden, denen die eingangs genannten Wirkprinzipien einer Detektion einer Änderung eines charakteristischen Körperschallfrequenzspektrums, einer Detektion von Körperschall mit Körperschallsensoren bzw. Ultraschallsensoren, oder einer Detektion von mechanischen Spannungsänderungen mittels piezoelektrischer Schichten zugrunde liegen, ist unter Verwendung derselben Ultraschallwandler möglich.

Das Verfahren zur Berührungsdetektion ist anwendbar, wenn das betreffende Material des Fahrzeugs, insbesondere der Fahrzeugaußenhaut, eine hinreichende Ausbreitung des Körperschalls gestattet, was vor allem bei metallischen Stoffen, harten Kunststoffen und Glas gegeben ist. Daher bieten sich sämtliche Bereiche der Fahrzeugaußenhaut und insbesondere folgende Konfigurationen für eine Anwendung des Verfahrens an: Integration mindestens eines verdeckten Ultraschallwandlers pro Fahrzeugtür, Integration mindestens eines verdeckten Ultraschallwandlers in Kofferraumklappe, Integration mindestens eines verdeckten Ultraschallwandlers in Schiebedach, Integration mindestens eines verdeckten Ultraschallwandlers in Tankdeckel, oder Integration mindestens eines verdeckten Ultraschallwandlers in Motorhaube.

Auch denkbar ist eine Nutzung z. B. im Zusammenhang mit Keyless-Entry-Systemen, um anhand der Berührung zu erkennen, welche Tür oder Klappe geöffnet werden soll, wie beispielsweise Figur 2 andeutet. Zur Realisierung des Verfahrens können gegebenenfalls die verdeckten Ultraschallwandler verwendet werden, die für die normale Überwachung des Umfelds bzw. Objektdetektion ohnehin schon im Fahrzeug vorhanden sind. Folglich kann im umgekehrten Fall ein für die Berührungsdetektion verdeckt verbauter Ultraschallwandler gleichzeitig auch zur Überwachung des Umfelds bzw. zur Objektdetektion bzw. als Näherungssensor verwendet werden.

Gemäß einer vorteilhaften Ausführungsform der Erfindung ist vorgesehen, dass das Wandmaterial 2 des Fahrzeugs eine Materialstärke von mindestens 0,1 Millimeter aufweist. Auch bevorzugt ist nach einer Ausführungsform vorgesehen, dass das Wandmaterial 2 des Fahrzeugs eine Materialstärke von höchstens einschließlich 3,0 Millimeter aufweist. Der für ein in diesem Bereich liegende Körperschall ist beispielhaft in einem der in Figur 3, z. B. im dritten Bild, gezeigten Signalverläufe dargestellt.

Gemäß einer vorteilhaften Ausführungsform der Erfindung ist vorgesehen, dass ein Glätten und/oder Filtern des Differenzsignals erfolgt.

Gemäß einer vorteilhaften Ausführungsform der Erfindung ist vorgesehen, dass der Ultraschallsensor 5 eine Frequenz von einschließlich mindestens 40 kHz bis einschließlich 80 kHz aufweist. Mit einer solchen Frequenz erfolgende Ultraschalldetektionen ergeben Schallsignale wie sie beispielhaft in den Signalverläufen der Fig. 3 dargestellt sind.

Gemäß der Erfindung ist vorgesehen, dass das Bilden des Differenzsignals zwischen den Umgebungsinformationen auf Basis von Rohdaten, einer Hüllkurve, und/oder eines anders gefilterten Empfangssignals, beispielsweise einer Korrelation mit einem Sendesignal des Ultraschallsensors 5 erfolgt. In Figur 3 sind exemplarisch Hüllkurven symbolisiert dargestellt. Dies bedeutet, dass das Ultraschallsignal durch die Hüllkurve dargestellt und verarbeitet wird.

Gemäß einer vorteilhaften Ausführungsform der Erfindung ist vorgesehen, dass das Detektieren der Referenz-Umgebungsinformation in definierten Zeitabständen wiederholt wird.

Gemäß einer vorteilhaften Ausführungsform der vorgenannten Ausführungsform ist vorgesehen, dass die definierten Zeitabstände weniger als eine Minute betragen, und insbesondere mindestens 10 Millisekunden betragen.

Gemäß einer vorteilhaften Ausführungsform der Erfindung ist vorgesehen, dass das Detektieren der Referenz-Umgebungsinformation ereignisbasiert wiederholt wird.

Gemäß einer vorteilhaften Ausführungsform der vorgenannten Ausführungsform ist vorgesehen, dass das Detektieren der Referenz-Umgebungsinformation derart ereignisbasiert wiederholt wird, dass eine Temperaturänderung und/oder eine Feuchtigkeitsänderung ein wiederholtes Detektieren der Referenz-Umgebungsinformation auslöst beziehungsweise auslösen.

Gemäß einer vorteilhaften Ausführungsform der Erfindung ist vorgesehen, dass ein Signalanteil mindestens eines mittels Luftschallsignalinformation 4 detektierten Objekts in der Referenz-Umgebungsinformation ein Negativsignal im Differenzsignal ergibt, sofern das Objekt relativ zum Fahrzeug bzw. zum jeweiligen Ultraschallwandler seine Position verändert hat.

Gemäß einer vorteilhaften Ausführungsform der vorgenannten Ausführungsform ist vorgesehen, dass das Negativsignal in seiner Umkehrung als Positivsignal in der Echtzeit-Umgebungsinformation zur Objektverfolgung verwendet wird.

### Bezugszeichenliste

- 1: Ultraschallsensorsystem
- 2: Wandmaterial eines Fahrzeugs
- 3: Störschallsignalinformation
- 4: Luftschallsignalinformation
- 5: Ultraschallsensor
- 6: Recheneinheit
- 7: Objektschallsignalinformation

- 100: Detektieren von Referenz-Umgebungsinformation
- 200: Speichern der Referenz-Umgebungsinformation
- 300: Detektieren von Echtzeit-Umgebungsinformation
- 400: Bilden eines Differenzsignals zwischen den Umgebungsinformationen

## Patentansprüche

1. Verfahren zur Berührungsdetektion mit einem Ultraschallsensorsystem (1) eines
Fahrzeugs mit einem Wandmaterial (2), wobei das Ultraschallsensorsystem (1) einen Ultraschallsensor (5) aufweist, der Abstandssensor ist, aufweisend folgende Schritte:
- Detektieren von Referenz-Umgebungsinformation (100) umfassend einen zeitlichen Verlauf eines Signals mit Luftschallinformation, mit dem Ultraschallsensor (5) des Ultraschallsensorsystems (1);
- Speichern der Referenz-Umgebungsinformation (200);
- Detektieren von Echtzeit-Umgebungsinformation (300), umfassend einen zeitlichen Verlauf eines Signals mit Luftschallsignalinformation (4) und Objektschallsignalinformation (7) eines das Wandmaterial (2) berührenden Objekts, mit dem Ultraschallsensor (5),
wobei die Detektion von Umgebungsinformationen, also von Referenz-Umgebungsinformationen und Echtzeit-Umgebungsinformationen, jeweils ein Erzeugen von Ultraschall und damit verbundenem Anregen des Wandmaterials und Aussenden von Ultraschall und anschließendem Messen der Schwingungen mittels des Ultraschallsensors umfasst; und
- Bilden eines Differenzsignals zwischen den Umgebungsinformationen (400) aus Referenz-Umgebungsinformation und Echtzeit-Umgebungsinformation, mit einer Recheneinheit (6), wobei das Bilden des Differenzsignals zwischen den Umgebungsinformationen (400) auf Basis von Rohdaten und/oder einer Hüllkurve erfolgt, beispielsweise einer Korrelation mit einem Sendesignal des Ultraschallsensors (5); und
- Erkennen von Berührungen einer Fahrzeugaußenwand des Fahrzeugs anhand des Differenzsignals;
**dadurch gekennzeichnet, dass**
- das Ultraschallsystem mit dem Ultraschallsensor (5) verdeckt eingebaut ist; und
- die Referenz-Umgebungsinformation (100) einen zeitlichen Verlauf eines Signals mit Störschallsignalinformation (3) des Wandmaterials (2) umfasst; und
- die Echtzeit-Umgebungsinformation (300) ferner einen zeitlichen Verlauf eines Signals mit Störschallsignalinformation (3) des Wandmaterials (2) umfasst.

2. Verfahren nach mindestens einem der vorgenannten Ansprüche, wobei
das Wandmaterial (2) des Fahrzeugs eine Materialstärke in einem Bereich von mindestens 0,1 Millimeter und höchstens einschließlich 3,0 Millimeter aufweist.

3. Verfahren nach mindestens einem der vorgenannten Ansprüche, wobei ein Glätten und/oder Filtern des Differenzsignals erfolgt.

4. Verfahren nach mindestens einem der vorgenannten Ansprüche, wobei der Ultraschallsensor (5) eine Frequenz von einschließlich mindestens 40 kHz bis einschließlich 80 kHz aufweist.

5. Verfahren nach mindestens einem der vorgenannten Ansprüche, wobei das Detektieren der Referenz-Umgebungsinformation (100) in definierten Zeitabständen wiederholt wird.

6. Verfahren nach mindestens einem der vorgenannten Ansprüche, wobei das Detektieren der Referenz-Umgebungsinformation (100) ereignisbasiert wiederholt wird.

7. Verfahren nach mindestens einem der vorgenannten Ansprüche, wobei ein Signalanteil mindestens eines in der Referenz-Umgebungsinformation mittels Luftschallsignalinformation (4) und einer Objektschallsignalinformation (7) detektierten Objekts in dem Differenzsignal ein Negativsignal ergibt, sofern das Objekt gemäß der Referenz-Umgebungsinformation seine Position verändert hat.

8. Verfahren nach mindestens einem der vorgenannten Ansprüche, wobei die Recheneinheit (6) eine im Ultraschallsensorsystem (1) anwendungsspezifische integrierte Schaltung ist.

9. System zur Berührungsdetektion für ein verdeckt verbautes Ultraschallsensorsystem (1) eines Fahrzeugs mit einem Wandmaterial (2), das System aufweisend:
ein Ultraschallsensorsystem (1) mit einem oder mehreren Ultraschallsensoren (5), ausgestaltet zum Detektieren von Referenz-Umgebungsinformation, wobei die Referenz-Umgebungsinformation umfasst einen zeitlichen Verlauf eines Signals mit Störschallsignalinformation (3) eines Wandmaterials (2) und Luftschallsignalinformation (4);
Speichermittel, ausgestaltet zum Speichern der Referenz-Umgebungsinformation;
wobei die einen oder mehreren Ultraschallsensoren (5) ausgestaltet ist/sind zum Detektieren von Echtzeit-Umgebungsinformation, wobei die Echtzeit-Umgebungsinformation umfasst einen zeitlichen Verlauf eines Signals mit Störschallsignalinformation (3) des Wandmaterials (2) und Luftschallsignalinformation (4) und Objektschallsignalinformation (7) eines das Wandmaterial (2) berührenden Objekts;
wobei die Detektion von Umgebungsinformationen, also von Referenz-Umgebungsinformationen und Echtzeit-Umgebungsinformationen, jeweils ein Erzeugen von Ultraschall und damit verbundenem Anregen des Wandmaterials und Aussenden von Ultraschall und anschließendem Messen der Schwingungen mittels des einen oder mehreren Ultraschallsensoren umfasst;
und
eine Recheneinheit (6), ausgestaltet zum Bilden eines Differenzsignals zwischen den Umgebungsinformationen aus Referenz-Umgebungsinformation und Echtzeit-Umgebungsinformation;
wobei das Bilden des Differenzsignals zwischen den Umgebungsinformationen (400) auf Basis von Rohdaten und/oder einer Hüllkurve, beispielsweise einer Korrelation mit einem Sendesignal in dem einen oder mehreren Ultraschallsensoren (5) erfolgt,und
Berührungen der Fahrzeugaußenwand anhand des Differenzsignals erkannt werden;
wobei das System Mittel zum Ausführen der Verfahrensschritte nach einem der Ansprüche 2-8 aufweist.

10. Fahrzeug mit einem System zur Berührungsdetektion nach Anspruch 9.

11. Computerprogramm, umfassend Befehle, die bei der Ausführung des Computerprogramms durch die Recheneinheit des Systems zur Berührungsdetektion nach Anspruch 9 diese veranlassen, ein Verfahren nach mindestens einem der Ansprüche 1 bis 8 auszuführen.

12. Computerlesbares Speichermedium, umfassend Befehle, die bei der Ausführung durch die Recheneiheit des System zur Berührungsdetektion nach Anspruch 9, diesen veranlassen, ein Verfahren nach mindestens einem der vorgenannten Ansprüche 1 bis 8 auszuführen.

## Claims

1. Method for touch detection with an ultrasonic sensor system (1) of a vehicle having a wall material (2), wherein the ultrasonic sensor system (1) comprises an ultrasonic sensor (5) that is a distance sensor, comprising the following steps:
- Detecting reference ambient information (100) comprising a temporal progression of a signal with airborne sound information, with the ultrasonic sensor (5) of the ultrasonic sensor system (1);
- Storing the reference ambient information (200);
- Detecting real-time ambient information (300), comprising a temporal progression of a signal with airborne sound signal information (4) and object sound signal information (7) of an object touching the wall material (2), with the ultrasonic sensor (5), wherein the detection of ambient information, i.e. of reference ambient information and real-time ambient information, each comprises generating ultrasound and the associated excitation of the wall material and emission of ultrasound and subsequent measurement of the vibrations by means of the ultrasonic sensor; and
- Forming a difference signal between the ambient information (400) from reference ambient information and real-time ambient information, with a computing unit (6), wherein the forming of the difference signal between the ambient information (400) is based on raw data and/or an envelope curve, for example a correlation with a transmission signal of the ultrasonic sensor (5); and
- Detecting touches of a vehicle exterior wall of the vehicle on the basis of the difference signal;
**characterised in that** the ultrasonic system with the ultrasonic sensor (5) is installed in a concealed manner; and the reference ambient information (100) comprises a temporal progression of a signal with interference sound signal information (3) of the wall material (2); and the real-time ambient information (300) further comprises a temporal progression of a signal with interference sound signal information (3) of the wall material (2).

2. Method according to at least one of the preceding claims, wherein the wall material (2) of the vehicle has a material thickness in a range of at least 0.1 millimetres and at most 3.0 millimetres inclusive.

3. Method according to at least one of the preceding claims, wherein a smoothing and/or filtering of the difference signal is performed.

4. Method according to at least one of the preceding claims, wherein the ultrasonic sensor (5) has a frequency of at least 40 kHz inclusive to at most 80 kHz inclusive.

5. Method according to at least one of the preceding claims, wherein the detection of the reference ambient information (100) is repeated at defined time intervals.

6. Method according to at least one of the preceding claims, wherein the detection of the reference ambient information (100) is repeated on an event-based basis.

7. Method according to at least one of the preceding claims, wherein a signal component of at least one object detected in the reference ambient information by means of airborne sound signal information (4) and object sound signal information (7) yields a negative signal in the difference signal, provided that the object has changed its position according to the reference ambient information.

8. Method according to at least one of the preceding claims, wherein the computing unit (6) is an application-specific integrated circuit in the ultrasonic sensor system (1).

9. System for touch detection for a concealed installed ultrasonic sensor system (1) of a vehicle having a wall material (2), the system comprising:
- an ultrasonic sensor system (1) with one or more ultrasonic sensors (5), configured to detect reference ambient information, wherein the reference ambient information comprises a temporal progression of a signal with interference sound signal information (3) of a wall material (2) and airborne sound signal information (4);
- storage means, configured to store the reference ambient information;
- wherein the one or more ultrasonic sensors (5) is/are configured to detect real-time ambient information, wherein the real-time ambient information comprises a temporal progression of a signal with interference sound signal information (3) of the wall material (2) and airborne sound signal information (4) and object sound signal information (7) of an object touching the wall material (2);
- wherein the detection of ambient information, i.e. of reference ambient information and real-time ambient information, each comprises generating ultrasound and the associated excitation of the wall material and emission of ultrasound and subsequent measurement of the vibrations by means of the one or more ultrasonic sensors; and
- a computing unit (6), configured to form a difference signal between the ambient information from reference ambient information and real-time ambient information;
- wherein the forming of the difference signal between the ambient information (400) is based on raw data and/or an envelope curve, for example a correlation with a transmission signal in the one or more ultrasonic sensors (5), and touches of the vehicle exterior wall are detected on the basis of the difference signal;
- wherein the system comprises means for carrying out the method steps according to one of claims 2-8.

10. Vehicle comprising a system for touch detection according to claim 9.

11. Computer program comprising instructions which, when the computer program is executed by the computing unit of the system for touch detection according to claim 9, cause said computing unit to carry out a method according to at least one of claims 1 to 8.

12. Computer-readable storage medium comprising instructions which, when executed by the computing unit of the system for touch detection according to claim 9, cause said computing unit to carry out a method according to at least one of the preceding claims 1 to 8.

## Revendications

1. Procédé de détection de contact avec un système de capteurs ultrasoniques (1) d'un véhicule comportant un matériau de paroi (2), le système de capteurs ultrasoniques (1) comprenant un capteur ultrasonique (5) qui est un capteur de distance, comprenant les étapes suivantes :
- Détecter des informations d'environnement de référence (100) comprenant une évolution temporelle d'un signal avec des informations de son aérien, avec le capteur ultrasonique (5) du système de capteurs ultrasoniques (1) ;
- Stocker les informations d'environnement de référence (200) ;
- Détecter des informations d'environnement en temps réel (300), comprenant une évolution temporelle d'un signal avec des informations de signal sonore aérien (4) et des informations de signal sonore d'objet (7) d'un objet touchant le matériau de paroi (2), avec le capteur ultrasonique (5), la détection des informations d'environnement, c'est-à-dire des informations d'environnement de référence et des informations d'environnement en temps réel, comprenant respectivement une génération d'ultrasons et une excitation associée du matériau de paroi ainsi qu'une émission d'ultrasons et une mesure subséquente des vibrations au moyen du capteur ultrasonique ; et
- Former un signal différentiel entre les informations d'environnement (400) à partir des informations d'environnement de référence et des informations d'environnement en temps réel, avec une unité de calcul (6), la formation du signal différentiel entre les informations d'environnement (400) étant effectuée sur la base de données brutes et/ou d'une enveloppe, par exemple d'une corrélation avec un signal d'émission du capteur ultrasonique (5) ; et
- Reconnaître les contacts d'une paroi extérieure du véhicule sur la base du signal différentiel ;
**caractérisé en ce que** le système ultrasonique avec le capteur ultrasonique (5) est installé de manière dissimulée ; et les informations d'environnement de référence (100) comprennent une évolution temporelle d'un signal avec des informations de signal sonore parasite (3) du matériau de paroi (2) ; et les informations d'environnement en temps réel (300) comprennent en outre une évolution temporelle d'un signal avec des informations de signal sonore parasite (3) du matériau de paroi (2).

2. Procédé selon au moins l'une des revendications précédentes, dans lequel le matériau de paroi (2) du véhicule présente une épaisseur de matériau dans une plage d'au moins 0,1 millimètre et d'au plus 3,0 millimètres inclus.

3. Procédé selon au moins l'une des revendications précédentes, dans lequel un lissage et/ou un filtrage du signal différentiel est effectué.

4. Procédé selon au moins l'une des revendications précédentes, dans lequel le capteur ultrasonique (5) présente une fréquence d'au moins 40 kHz inclus jusqu'à 80 kHz inclus.

5. Procédé selon au moins l'une des revendications précédentes, dans lequel la détection des informations d'environnement de référence (100) est répétée à des intervalles de temps définis.

6. Procédé selon au moins l'une des revendications précédentes, dans lequel la détection des informations d'environnement de référence (100) est répétée de manière événementielle.

7. Procédé selon au moins l'une des revendications précédentes, dans lequel une composante de signal d'au moins un objet détecté dans les informations d'environnement de référence au moyen des informations de signal sonore aérien (4) et des informations de signal sonore d'objet (7) produit un signal négatif dans le signal différentiel, dans la mesure où l'objet a modifié sa position conformément aux informations d'environnement de référence.

8. Procédé selon au moins l'une des revendications précédentes, dans lequel l'unité de calcul (6) est un circuit intégré spécifique à l'application dans le système de capteurs ultrasoniques (1).

9. Système de détection de contact pour un système de capteurs ultrasoniques (1) installé de manière dissimulée d'un véhicule comportant un matériau de paroi (2), le système comprenant :
- un système de capteurs ultrasoniques (1) avec un ou plusieurs capteurs ultrasoniques (5), configuré pour détecter des informations d'environnement de référence, les informations d'environnement de référence comprenant une évolution temporelle d'un signal avec des informations de signal sonore parasite (3) d'un matériau de paroi (2) et des informations de signal sonore aérien (4) ;
- des moyens de stockage, configurés pour stocker les informations d'environnement de référence ;
- le ou les capteurs ultrasoniques (5) étant configuré(s) pour détecter des informations d'environnement en temps réel, les informations d'environnement en temps réel comprenant une évolution temporelle d'un signal avec des informations de signal sonore parasite (3) du matériau de paroi (2) et des informations de signal sonore aérien (4) et des informations de signal sonore d'objet (7) d'un objet touchant le matériau de paroi (2) ;
- la détection des informations d'environnement, c'est-à-dire des informations d'environnement de référence et des informations d'environnement en temps réel, comprenant respectivement une génération d'ultrasons et une excitation associée du matériau de paroi ainsi qu'une émission d'ultrasons et une mesure subséquente des vibrations au moyen du ou des capteurs ultrasoniques ; et
- une unité de calcul (6), configurée pour former un signal différentiel entre les informations d'environnement à partir des informations d'environnement de référence et des informations d'environnement en temps réel ;
- la formation du signal différentiel entre les informations d'environnement (400) étant effectuée sur la base de données brutes et/ou d'une enveloppe, par exemple d'une corrélation avec un signal d'émission dans le ou les capteurs ultrasoniques (5), et les contacts de la paroi extérieure du véhicule étant reconnus sur la base du signal différentiel ;
- le système comprenant des moyens pour exécuter les étapes du procédé selon l'une des revendications 2 à 8.

10. Véhicule avec un système de détection de contact selon la revendication 9.

11. Programme informatique comprenant des instructions qui, lors de l'exécution du programme informatique par l'unité de calcul du système de détection de contact selon la revendication 9, amènent celle-ci à exécuter un procédé selon au moins l'une des revendications 1 à 8.

12. Support de stockage lisible par ordinateur comprenant des instructions qui, lors de l'exécution par l'unité de calcul du système de détection de contact selon la revendication 9, amènent celle-ci à exécuter un procédé selon au moins l'une des revendications précédentes 1 à 8.
